(19) Europäisches Patentamt
European Patent Office
Office européen des brevets

(11) **EP 2 982 426 A1**

(12) **EUROPÄISCHE PATENTANMELDUNG**

(43) Veröffentlichungstag:
**10.02.2016  Patentblatt 2016/06**

(21) Anmeldenummer: **14179659.9**

(22) Anmeldetag: **04.08.2014**

(51) Int Cl.:
**B01D 33/15** (2006.01)      **B01D 33/46** (2006.01)
**B01D 33/76** (2006.01)      **B01D 33/80** (2006.01)
**B07B 1/08** (2006.01)       **D21D 5/04** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Primetals Technologies Germany GmbH**
**91052 Erlangen (DE)**

(72) Erfinder: **Kummer, Dominik**
**91052 Erlangen (DE)**

(74) Vertreter: **Metals@Linz**
**Primetals Technologies Austria GmbH**
**Turmstraße 44**
**4031 Linz (AT)**

(54) **Siebeinrichtung, Verfahren zu deren Betrieb und Verwendung**

(57)    Die Erfindung betrifft eine Siebeinrichtung (1), umfassend:
- eine mittels einer senkrechten Drehachse (2) rotierbare Siebscheibe (3) zur Siebung eines zu siebenden Mediums (4),
- ein Zuführrohr (5) zur Zuführung des zu siebenden Mediums (4) zur Siebscheibe (3), wobei das Zuführrohr (5) eine oberhalb der Siebscheibe (3) mündende Austrittsöffnung (5a) für das zu siebende Medium (4) aufweist, wobei die Austrittsöffnung (5a) in Richtung der Drehachse (2) gesehen neben der Drehachse (2) angeordnet ist und eingerichtet ist, einen ersten Teilbereich der Siebscheibe (3) mit dem zu siebenden Medium (3) zu beaufschlagen,
- ein unterhalb des ersten Teilbereichs der Siebscheibe (3) angeordnetes Abführrohr (6) zur Abführung des durch die Siebscheibe (3) hindurchtretenden, gesiebten Mediums (4'), wobei das Abführrohr (6) eine Aufnahmeöffnung (6a) für das gesiebte Medium (4') aufweist, und
- eine im Zuführrohr (5) angeordnete, durch das zu siebende Medium (4) antreibbare Turbineneinrichtung (7), welche eingerichtet ist, die Drehachse (2) und die damit verbundene Siebscheibe (3) anzutreiben.

FIG 5

**Beschreibung**

Die Erfindung betrifft eine Siebeinrichtung und ein Verfahren zu deren Betrieb. Die Erfindung betrifft weiterhin eine Verwendung einer Siebeinrichtung sowie eine Flotationseinrichtung mit einer Siebeinrichtung.

Die Flotation ist ein wichtiges Verfahren zur Trennung und Anreicherung von mineralischen Rohstoffen. Prinzipiell basiert die Flotation auf dem Ausgangsstoff einer Suspension, auch "Schlamm" (englisch: "Slurry") oder "Pulpe" genannt. Feingemahlenes Gestein und Wertstoff bilden zusammen mit Wasser eine pumpfähige und damit transportierbare Suspension. Diese wird nun in verschiedenen Schritten aufgetrennt mit dem Ziel, den oftmals nur in sehr geringen Mengen enthaltenen Wertstoff zu separieren.

Im Bereich des Suspension-Zulaufs zu einer Flotationsmaschine kommt es aufgrund von Verunreinigungen und/oder Fremdstoffen in der Suspension zu Verstopfungen in den Leitungen, Abzweigen oder Eindüsesystemen. Solche Fremdstoffe können durch Kunststoffteile, Fasern, Holzteile, Metallteile (Schrauben, Muttern usw.), aber auch Zigarettenstummel, Müll usw. gebildet sein. Die Größe der Fremdstoffteile variiert hierbei von einigen Millimetern bis zu wenigen Zentimetern. Für vorgelagerte Prozessschritte stellen solche Fremdstoffe in der Suspensionsaufbereitung meist kein Problem dar, da hier keine empfindlichen Düsensysteme oder sonstige Engstellen zum Einsatz kommen, die verstopfen könnten. Die Fremdpartikel werden durchgeschleust und gelangen so in den Suspensions-Zulauf der Flotationsmaschine. Tritt eine Verstopfung auf, so muss die Flotationsmaschine abgeschaltet, gereinigt und wieder angefahren werden. Das führt zu unnötigen Stillstandzeiten und damit verbundenen hohen Kosten. Aufgrund des Produktionsausfalles und einer hohen Sedimentationsgefahr der sich zum Zeitpunkt der Abschaltung in der Flotationsmaschine befindlichen Suspension sind solche Stillstände unerwünscht.

In der Prozess- und Verfahrenstechnik sind je nach Anwendungsbereich bereits unterschiedliche Siebsysteme bekannt. Im Bergbau und bei der Erzaufbereitung sind die Möglichkeiten, Siebe oder Filter einzusetzen allerdings stark eingeschränkt, da hier ein Medium verarbeitet wird, das stark abrasiv ist und eine hohe Neigung zu Sedimentation aufweist.

So ist bereits der Einsatz von Siebkorbfiltern bekannt, durch welche die Suspension fließt. Ein eingehängter Siebkorb filtert bzw. siebt die Suspension, setzt sich jedoch mit der Zeit und auf Grund der Sedimentationsneigung des Mediums zu. Der Siebkorb muss dann zu Reinigungszwecken entnommen und/oder (rück-)gespült werden. Um einen kontinuierlichen Betrieb zu ermöglichen, muss demnach eine redundante Siebkorbfilter-Anordnung installiert werden, auf welche schnell umgeschaltet werden kann. Diese redundante Anordnung von Rohrleitungen und Ventilen sowie die zum automatisierten Umschalten benötigte Automatisierungstechnik macht diese Lösung in Summe relativ teuer und aufwendig. Das größte Problem ist allerdings das sogenannte "Versanden", bei dem sich die Suspension in dem baubedingt großen Raum zum Einsetzen des Filterkorbs schnell absetzt und somit einen Großteil der verfügbaren Siebfläche unnutzbar macht. Dies erschwert die Reinigung zusätzlich und verlängert den Zeitbedarf für den Reinigungsvorgang.

Weiterhin sind Bogensiebe oder sogenannte "Banana Filter" bekannt. Bei einem Bogensieb wird die Suspension über ein offenes, leicht gebogenes "bananenförmiges" Sieb geführt. Dabei werden abzutrennende Partikel über die Sieboberfläche ausgetragen, während die Suspension einfach hindurchfließen kann und in den Prozess zurückgeführt wird. Die Verunreinigungen werden durch eine Sprühvorrichtung ausgetragen, die weiterhin das Bogensieb reinigt. Die gesamte Vorrichtung besitzt einen relativ hohen Aufbau (ca. 2 m) und ist allgemein sehr platzintensiv gebaut. Aufgrund der vergleichsweise großen Siebfläche und der Abmaße ist ein Bogensieb vergleichsweise teuer und die räumliche Integration in ein Gesamtanlagenkonzept relativ aufwendig. Auch bei Bogensieben tritt ein "Versanden" auf, wodurch die Funktion eingeschränkt wird.

Schließlich werden auch Auslaufsiebe eingesetzt, welche die technisch simpelste Lösung darstellen. Auslaufsiebe werden am Auslauf eines Fallrohres oder eines sonstigen Auslaufes positioniert. Sofern solche Fallrohre in Vorlage- oder Pufferbehälter münden, strömt die Suspension aus dem Fallrohr über das Auslaufsieb in den Behälter und wird so gesiebt. Nachteilig dabei ist, dass das Auslaufsieb, sobald sich dieses mit Verunreinigen zugesetzt hat, schwer zu reinigen ist. Die größte Gefahr ist hierbei, dass im Laufe eines Reinigungsvorgangs oder eines Wechsels des Auslaufsiebes ungesiebte Suspension in den Behälter fließt. Die Kosten der Lösung sind dabei gering und der Platzbedarf minimal. Der Aufwand für die Reinigung der Siebfläche ist jedoch relativ groß und mit Risiken verbunden.

Es ist daher Aufgabe der Erfindung, eine gegenüber den bekannten Lösungen verbesserte Siebeinrichtung und ein Verfahren zu deren Betrieb bereitzustellen.

Die Aufgabe wird durch eine Siebeinrichtung gelöst, umfassend:

- eine mittels einer senkrechten Drehachse rotierbare Siebscheibe zum Sieben eines zu siebenden Mediums,
- ein Zuführrohr zur Zuführung des zu siebenden Mediums zur Siebscheibe, wobei das Zuführrohr eine oberhalb der Siebscheibe mündende Austrittsöffnung für das zu siebende Medium aufweist, wobei die Austrittsöffnung in Richtung der Drehachse gesehen neben der Drehachse angeordnet ist und eingerichtet ist, einen ersten Teilbereich der Siebscheibe mit dem zu siebenden Medium zu beaufschlagen,
- ein unterhalb des ersten Teilbereichs der Siebscheibe angeordnetes Abführrohr zur Abführung des durch die Siebscheibe hindurchtretenden, gesiebten Mediums, wobei das Abführrohr eine Aufnahmeöffnung für das gesiebte Medium aufweist, und

- eine im Zuführrohr angeordnete, durch das zu siebende Medium antreibbare Turbineneinrichtung, welche eingerichtet ist, die Drehachse und die damit verbundene Siebscheibe anzutreiben.

Eine derartige Siebeinrichtung ist stromlos betreibbar und daher besonders effizient einsetzbar. An den Installationsort werden keine besonderen Anforderungen gestellt. Das zu siebende Medium treibt die Turbineneinrichtung an, welche ihrerseits die Siebscheibe antreibt. Das zu siebende Medium gelangt im ersten Teilbereich auf die Siebscheibe, wobei ein Großteil des Mediums durch das Siebgewebe der Siebscheibe hindurch treten kann und über die Aufnahmeöffnung als gesiebtes Medium abführbar ist. Die rotierende Siebscheibe transportiert die, sich darauf ablagernden Partikel aus dem zu siebenden Medium, die zu groß sind, das Siebgewebe der Siebscheibe zu passieren, aus dem Bereich heraus, in welchem das zu siebende Medium auf die Siebscheibe aufgegeben wird. Die Rotationsbewegung unterstützt dabei das Abgleiten der abgetrennten Partikel von der Siebscheibe und es erfolgt ein Austrag der abgetrennten Partikel bzw. Fremdstoffe aus der Siebeinrichtung. Durch die Rotationsbewegung der Siebscheibe wird immer wieder neues, sauberes Siebgewebe zur Siebung des zu siebenden Mediums unter der Austrittsöffnung bereitgestellt. So wird ein Verstopfen der Siebscheibe wirkungsvoll vermieden. Die erfindungsgemäße Siebeinrichtung ist kontinuierlich und bei geringem Platzbedarf betreibbar. Redundante Systeme sind nicht erforderlich.

Die Installation der Siebeinrichtung kann überall dort problemlos erfolgen, wo Zuführrohre mit Gefälle verlaufen, so dass die potentielle oder kinetische Energie des zu siebenden Mediums für den Antrieb der Turbineneinrichtung nutzbar ist. Die Bauform ist relativ einfach und dabei kostengünstig realisierbar.

Bevorzugt ist das Zuführrohr und/oder das Abführrohr senkrecht angeordnet. Aber auch Zuführ- und Abführrohre, die mit einem Gefälle verlaufen, sind einsetzbar. Die Zuführ- und Abführleitung wird insbesondere in ein senkrecht verlaufendes (Fall-)Rohr eingebaut, vorzugsweise geflanscht oder mittels eines geeigneten Schnellverschlusssystems befestigt.

Die Siebeinrichtung kann dabei mitten im Verlauf des (Fall-)Rohres eingebaut werden oder am Auslauf am Rohrende des (Fall-)Rohres eingesetzt werden. Die Abmaße der Siebeinrichtung werden dabei bevorzugt an die betroffene Rohrleitung angepasst, in welche die Siebeinrichtung eingesetzt werden soll. Falls nötig oder von Vorteil, kann eine Reduzierung oder Erweiterung des Rohrquerschnittes vor und/oder nach der Siebeinrichtung vorgesehen sein.

Die Siebscheibe ist bevorzugt so dimensioniert und positioniert, dass der komplette Querschnitt des Zuführrohres durch diese abgedeckt ist. Die Siebscheibe ist dabei vorzugsweise über die Drehachse in einem geeigneten Lager aufgehängt und frei drehbar. Für die Dimensionierung der Siebscheibe gilt überschlägig insbesondere:

```
Durchmesser Siebscheibe = 2,5 x Durchmesser Zuführrohr
```

Somit wird nur der, sich gemäß der Rotationsbewegung der Siebscheibe ständig ändernde erste Teilbereich der Siebfläche als "aktive" Siebfläche eingesetzt, in deren Bereich tatsächlich ein Siebvorgang erfolgt. Der übrige, zweite Teilbereich der Siebfläche dient lediglich zum Austragen der abgetrennten Partikel bzw. Fremdstoffe und stellt eine "passive" Siebfläche dar, in deren Bereich kein Siebvorgang sondern das Austragen der Fremdstoffe erfolgt.

Als Siebgewebe der Siebscheibe wird bevorzugt ein Drahtgewebe eingesetzt. Die Maschenweite des Drahtgewebes ist dabei abhängig von der maximal tolerierbaren Größe der Fremdstoffpartikel. Als Material für die Siebscheibe und die Drehachse ist Edelstahl bevorzugt.

In einer bevorzugten Ausgestaltung weist die Siebeinrichtung weiterhin mindestens eine Düse zur Abgabe eines Reinigungsmittels in Richtung der Siebscheibe auf. Die mindestens eine Düse unterstützt mittels des abgegebenen Reinigungsmittels den Austrag der vom zu siebenden Medium abgetrennten Partikel bzw. Fremdstoffe und reinigt zudem das Siebgewebe. Damit ist eine permanente Regenerierung und Sauberhaltung des Siebgewebes gewährleistet.

Als Reinigungsmittel haben sich dabei insbesondere Wasser, organische Lösungsmittel oder Mischungen daraus bewährt.

Insbesondere ist die mindestens eine Düse in Richtung der Drehachse gesehen einem zweiten Teilbereich der Siebscheibe zugeordnet und dazu eingerichtet, diesen mit dem Reinigungsmittel zu beaufschlagen, wobei der zweite Teilbereich neben und/oder beabstandet von dem ersten Teilbereich angeordnet ist. Die mindestens eine Düse ist demnach beabstandet von der Austrittsöffnung angeordnet, wobei kein Reinigungsmittel in das gesiebte Medium gelangen kann. Das Reinigungsmittel wird vielmehr mit den abgetrennten Partikeln bzw. Fremdstoffen ausgetragen und kann, gegebenenfalls nach einer Aufbereitung desselben, im Kreis geführt und wiederverwendet werden.

Die mindestens eine Düse befindet sich demnach im Bereich der "passiven" Siebfläche der Siebscheibe und sorgt dafür, dass das Siebgewebe intensiv von den aufgefangenen Fremdstoffen gereinigt wird. Bevorzugt sind dabei Düsenanordnungen, welche der Siebscheibe das Reinigungsmittel von oberhalb und/oder unterhalb der Ebene der Siebscheibe zuführen. Durch eine Neigung der mindestens einen Düse werden die abgetrennten Partikel bzw. Fremdstoffe vom Siebgewebe gewaschen und, insbesondere über eine geneigte Ablauffläche, abgeführt.

Zum Austrag der abgetrennten Partikel bzw. Fremdstoffe kann die Siebeinrichtung mindestens einen Abstreifer aufweisen, der die abgetrennten Partikel bzw. Fremdstoffe im zweiten Teilbereich mechanisch von der Siebscheibe abstreift.

Es hat sich weiterhin bewährt, wenn die Siebeinrichtung weiterhin ein Gehäuse umfasst, in welchem zumindest die Siebscheibe angeordnet ist, wobei das Gehäuse weiterhin mit dem Zuführrohr und dem Abführrohr verbunden ist, wobei die Austrittsöffnung und die Aufnahmeöffnung im Gehäuse angeordnet sind, und wobei das Gehäuse an seiner Unterseite eine Gehäuseablauföffnung zur Abführung von Siebrückständen aufweist, welche von dem zu siebenden Medium abgetrennt wurden. Solche Siebrückstände sind die bereits oben erwähnten abgetrennten Partikel bzw. Fremdstoffe. Zusammen mit den Siebrückständen wird, sofern vorhanden, eingesetztes Reinigungsmittel über die Gehäuseablauföffnung abgeführt. Das Gehäuse schützt die Siebeinrichtung vor äußeren Einflüssen und gewährleistet einen störungsfreien Betrieb. Weiterhin ermöglicht das Gehäuse eine kompakte und platzsparende Bauform der Siebeinrichtung.

Die Gehäuseablauföffnung ist insbesondere an eine, in das Gehäuse integrierte, geneigte Ablauffläche angrenzend angeordnet, über welche die abgetrennten Partikel bzw. Fremdstoffe bevorzugt abgeführt werden. Die Gehäuseablauföffnung führt abgetrennte Partikel bzw. Fremdstoffe, ggf. weiterhin auch vorhandenes Reinigungsmittel, bevorzugt in ein Auffangbecken ab. Dieses Auffangbecken ist vorzugsweise mit einem Reinigungsaggregat ausgestattet, mittels welchem aufgefangenes gebrauchtes Reinigungsmittel gefiltert werden kann, so dass eine nachfolgende Wiederverwendung des aufbereiteten Reinigungsmittels möglich ist.

In einer bevorzugten Ausgestaltung der Siebeinrichtung beherbergt das Gehäuse weiterhin die Drehachse, die Turbineneinrichtung und die mindestens eine Düse, gegebenenfalls weiterhin den mindestens einen Abstreifer. Dadurch wird auch die Verbindung von Turbineneinrichtung zu Siebscheibe geschützt und eine versehentliche Verstellung der Ausrichtung der mindestens einen Düse oder eine Beschädigung der Düse oder des Abstreifers verhindert.

Vorzugsweise ist die Turbineneinrichtung mit der Drehachse über ein Getriebe verbunden. Hierbei wird bevorzugt ein mechanisches, formschlüssiges Getriebe eingesetzt. Dabei kann es sich um ein Schneckengetriebe, ein Kegelradgetriebe, eine Kombination aus einem Stirn- und Kegelradgetriebe und dergleichen handeln. Die Drehachse verfügt dabei insbesondere über ein Zahnrad, durch das sie mit dem Getriebe verbunden ist. Als Material für das Zahnrad ist hierbei Edelstahl bevorzugt.

Die Turbineneinrichtung weist insbesondere eine horizontale Turbinenachse und ein an dieser angeordnetes Flügelrad auf. Besonders geeignet ist eine derartige Ausführungsform zum Einsatz an einem senkrecht verlaufenden Zuführrohr.

Das Flügelrad ist bevorzugt so angeordnet, dass es nur zum Teil, insbesondere zur Hälfte (bzw. mit einem Flügel), in das von oben einfließende zu siebende Medium, insbesondere hier eine Suspension, eintaucht und durch den aufprallenden Medienstrom - ähnlich einer Mühle oder bei einem Wasserzähler - in Rotation versetzt wird. Dies trägt dazu bei, dass eine Blockade des Flügelrades durch Fremdstoffe in jedem Fall vermieden wird. Geführt ist das Flügelrad über die Turbinenachse und geeignete Lager. Insbesondere ist das Flügelrad über die Drehachse und ein Zahnrad, insbesondere ein Schnecken-Zahnrad, mit dem Getriebe verbunden. Material und Dimension des Flügelrades, der Turbinenachse und des Zahnrades sind abhängig vom Massenstrom des zu siebenden Mediums und des Durchmessers des das Medium antransportierenden Rohres zu wählen. Bevorzugtes Material ist hier Edelstahl, für das Flügelrad auch Kunststoff.

Das Getriebe stellt die Verbindung zwischen Flügelrad bzw. dessen Turbinenachse und der Siebscheibe bzw. deren Drehachse dar und ermöglicht zum einen die Umlenkung der horizontalen Rotationsbewegung des Flügelrades auf die vertikale Rotationsbewegung der Siebscheibe, zum anderen die Anpassung der Drehzahl des Flügelrades an die angestrebte Drehzahl der Siebscheibe. Bevorzugt ist dabei eine Umlenkung über ein Schneckenrad oder über Kegelräder. Abhängig von der gewünschter Drehzahl der Siebscheibe und der vorherrschenden Drehzahl des Flügelrades - die abhängig vom Volumenstrom bzw. der Strömungsgeschwindigkeit des zu siebenden Mediums ist - wird die Art des Getriebes und dessen Übersetzungsverhältnis festgelegt.

Die Erfindung wird weiterhin durch ein Verfahren zum Betreiben einer erfindungsgemäßen Siebeinrichtung gelöst, umfassend folgende Schritte:

- Zuführen eines zu siebenden Mediums über das Zuführrohr in den ersten Teilbereich der Siebscheibe, wobei das zu siebende Medium die Turbineneinrichtung antreibt, welche ihrerseits die Drehachse und die Siebscheibe rotierend antreibt,
- Siebung des zu siebenden Mediums, wobei das durch die Siebscheibe hindurchtretende Medium ein gesiebtes Medium ausbildet und das auf der Siebscheibe verbleibende Medium einen Siebrückstand bildet,
- Abführen des gesiebten Mediums über die Aufnahmeöffnung in das Abführrohr, und
- Abführen des Siebrückstands von der Siebscheibe.

Wie die oben beschriebene Siebeinrichtung ist das Verfahren stromlos betreibbar und daher besonders effizient einsetzbar. Das zu siebende Medium treibt, wie bereits oben zur Siebeinrichtung beschrieben, die Turbineneinrichtung an, welche ihrerseits die Siebscheibe antreibt. Das zu siebende Medium gelangt im ersten Teilbereich auf die Siebscheibe, wobei ein Großteil des Mediums durch das Siebgewebe der Siebscheibe hindurch treten kann und über die Aufnahmeöffnung als gesiebtes Medium abführbar ist. Die rotierende Siebscheibe transportiert die, sich darauf ablagernden Partikel aus dem zu siebenden Medium, die zu groß sind, das Siebgewebe der Siebscheibe zu passieren, aus dem Bereich heraus, in welchem das zu siebende Medium auf die Siebscheibe aufgegeben wird. Die Rotationsbewegung unterstützt dabei das Abgleiten der abgetrennten Partikel von der Siebscheibe und es erfolgt ein Austrag der abgetrennten Partikel bzw. Fremdstoffe aus der Siebeinrichtung. Durch die Rotationsbewegung der Siebscheibe wird immer wieder neues, sauberes Siebgewebe zur Siebung des zu siebenden Mediums unter der Austrittsöffnung bereitgestellt. So wird ein Verstopfen der Siebscheibe wirkungsvoll vermieden. Das erfindungsgemäße Verfahren ist kontinuierlich und kostengünstig durchführbar. Das Verfahren kann überall dort problemlos eingesetzt werden, wo Zuführrohre mit Gefälle verlaufen, so dass die potentielle oder kinetische Energie des zu siebenden Mediums für den Antrieb der Turbineneinrichtung nutzbar ist.

Die Siebscheibe wird dabei bevorzugt mit einer Drehzahl im Bereich von 15 bis 25 Umdrehungen pro Minute rotiert. Langsamere Rotationsgeschwindigkeiten erhöhen die Gefahr einer Verstopfug des Siebgewebes der Siebscheibe, während höhere Rotationsgeschwindigkeiten ein starkes Spritzen des zu siebenden Mediums verursachen können und damit eine unerwünschte Verunreinigung der Siebscheibe im zweiten Teilbereich und ein Austrag von Medium, das nicht abgetrennt werden soll, zusammen mit den Fremdstoffen nach sich ziehen können.

Bevorzugt erfolgt das Abführen des Siebrückstands von der Siebscheibe mittels eines Reinigungsmittels, das über die mindestens eine Düse auf die Siebscheibe aufgebracht wird. Das Reinigungsmittel verhindert nicht nur ein Festsetzen der Siebrückstände auf der Siebscheibe sondern reinigt auch das Siebgewebe von Suspensionsresten, die ein Verstopfen des Siebgewebes zur Folge haben könnten.

Insbesondere wird das zu siebende Medium durch eine Suspension gebildet. Aber auch Dispersionen aus Gasen und Feststoffpartikeln können das zu siebende Medium ausbilden.

Eine Flotationseinrichtung, umfassend eine Flotationsmaschine mit einer Flotationskammer zur Aufnahme von Suspension und eine Speiseeinrichtung zum Zuführen von Suspension in die Flotationskammer, wobei die Speiseeinrichtung zur Siebung der Suspension eine erfindungsgemäße Siebeinrichtung umfasst, hat sich als besonders effektiv betreibbar erwiesen. Der kontinuierliche Betrieb der Flotationsmaschine ist sichergestellt, da Verstopfungen im Suspensions-Zulauf zur Flotationsmaschine nicht mehr auftreten können. Zeitaufwendige Wartungs- und Reinigungsarbeiten entfallen, so dass die Anlagenverfügbarkeit und das Ausbringen signifikant erhöht werden.

Die Verwendung einer erfindungsgemäßen Siebeinrichtung zur Siebung eines Mediums in Form einer Suspension mit einem Feststoffpartikel-Gehalt im Bereich von 40 bis 60 Vol.-% hat sich als besonders vorteilhaft erwiesen. Eine derartige Suspension weist stark abrasive Eigenschaften auf und führt bei Einsatz von Siebkorbfiltern, Bogensieben und Ablaufsieben zum Abtrennen von Fremdstoffen aus der Suspension zu den eingangs beschriebenen Problemen. Die erfindungsgemäße Siebeinrichtung hingegen kann bei derartigen Suspensionen kontinuierlich und hocheffektiv eingesetzt werden.

Die Figuren 1 bis 6 sollen eine erfindungsgemäße Siebeinrichtung und ein Verfahren zu deren Betrieb sowie deren Verwendung beispielhaft erläutern. So zeigt:

FIG 1     eine Vorderansicht einer Siebeinrichtung;

FIG 2     die Draufsicht auf die Siebeinrichtung aus FIG 1;

FIG 3     eine Seitenansicht der Siebeinrichtung aus FIG 1;

FIG 4     einen Schnitt IV - IV durch die Siebeinrichtung aus FIG 1;

FIG 5     einen Schnitt V - V durch die Siebeinrichtung aus FIG 3 mit zusätzlichem Auffangbecken;

FIG 6     eine Flotationseinrichtung umfassend eine Siebeinrichtung; und

FIG 7     einen Schnitt VII - VII durch das Flügelrad gemäß FIG 5.

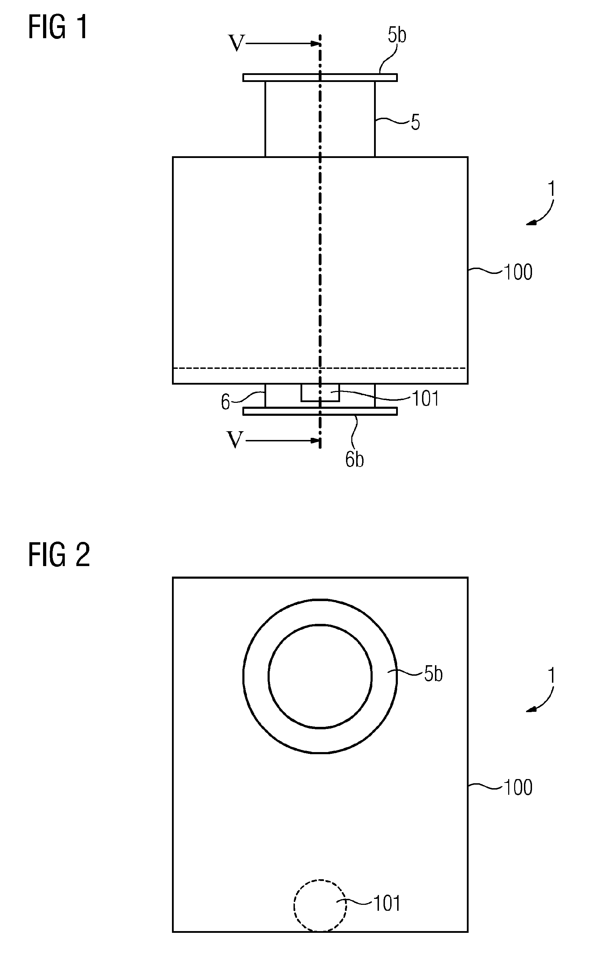

FIG 1 zeigt eine Vorderansicht einer Siebeinrichtung 1 mit einem Gehäuse 100, einem Zuführrohr 5 mit Flansch 5b, einem Abführrohr 6 mit Flansch 6b sowie einer Gehäuseablauföffnung 101.

FIG 2 zeigt die Draufsicht auf die Siebeinrichtung 1 aus FIG 1, wobei die Position der Gehäuseablauföffnung 101 auf der Gehäuseunterseite mit einer gestrichelten Linie angedeutet ist. Gleiche Bezugszeichen wie in FIG 1 kennzeichnen gleiche Elemente.

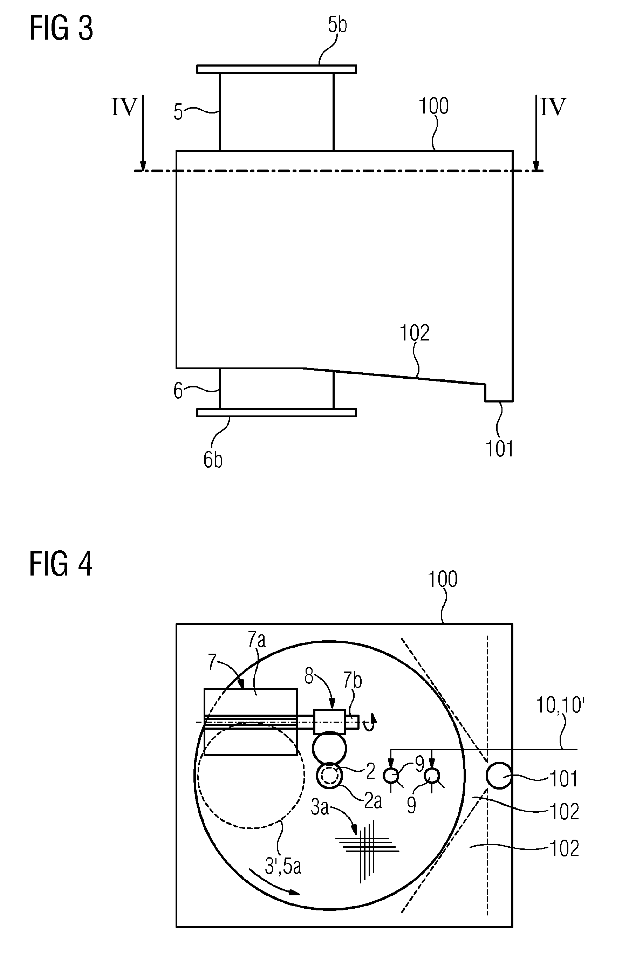

FIG 3 zeigt eine Seitenansicht der Siebeinrichtung 1 aus FIG 1, wobei eine geneigte Unterseite des Gehäuses 100 erkennbar ist, die gleichzeitig innerhalb des Gehäuses 100 eine Ablauffläche 102 ausbildet. Gleiche Bezugszeichen wie in FIG 1 kennzeichnen gleiche Elemente.

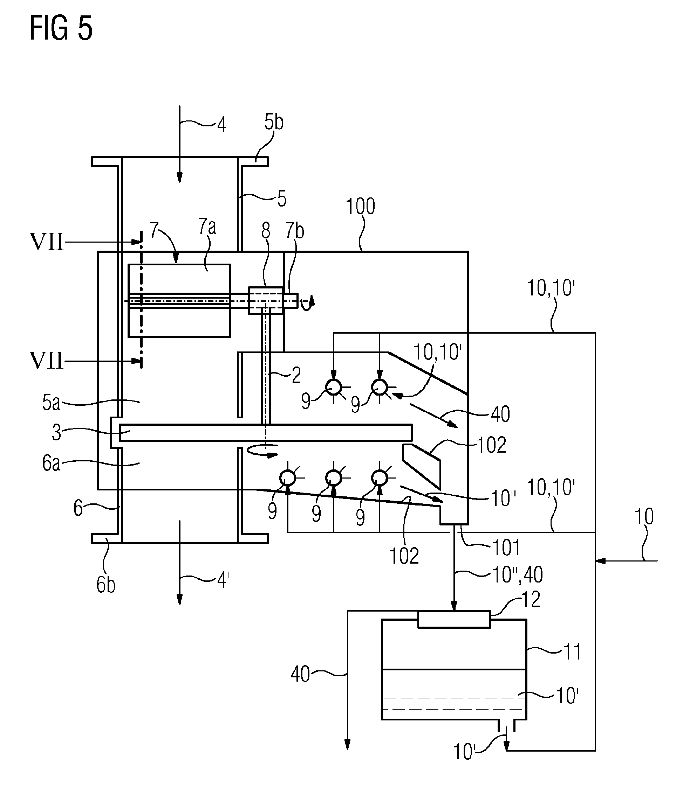

FIG 4 zeigt einen Schnitt IV -IV durch die Siebeinrichtung 1 aus FIG 1. Gleiche Bezugszeichen wie in den Figuren 1 bis 3 kennzeichnen gleiche Elemente. In dieser Ansicht ist die Siebscheibe 3 und die Lage der Drehachse 2 im Hinblick auf die durch eine gestrichelte Linie angedeutete Austrittsöffnung 5a des Zuführrohrs 5 (vergleiche FIG 1) im Gehäuse 100 erkennbar. Die gestrichelte Linie, die die Lage der Austrittsöffnung 5a kennzeichnet, bezeichnet gleichzeitig die Lage des ersten Teilbereichs 3' der Siebscheibe 3, in dem das aus der Austrittsöffnung 5a austretende zu siebende Medium 4 (vergleiche FIG 5) auf die Siebscheibe 3 auftrifft und gesiebt wird. Nachdem die Siebscheibe 3 sich um die Drehachse 2 dreht, ergibt sich eine permanente Verschiebung des ersten Teilbereichs 3' auf der Siebscheibe 3. Die Siebscheibe 3 ist im Wesentlichen durch ein Siebgewebe 3a gebildet, das hier zur besseren Übersicht nur angedeutet dargestellt ist. Die Drehachse 2 ist über ein Zahnrad 2a mit einem Getriebe 8 verbunden. Weiterhin ist eine Turbineneinrichtung 7 vorhanden, deren Flügelrad 7a im Zuführrohr 5 angeordnet ist und durch zu siebendes Medium 4 (siehe FIG 5) angetrieben wird. Das Flügelrad 7a dreht sich mit der Turbinenachse 7b, die über das Getriebe 8 die Drehachse 2 und die Siebscheibe 3 antreibt. Weiterhin sind hier Düsen 9 vorhanden, die Reinigungsmittel 10 oder aufbereitetes Reinigungsmittel 10' auf einen zweiten Teilbereich der Siebscheibe 3 sprühen, der vom ersten Teilbereich 3' beabstandet ist. Vom zu siebenden Medium 4 abgetrennte Siebrückstände 40 in Form von Partikeln bzw. Fremdstoffen (vergleiche FIG 5) werden aufgrund der Rotation der Siebscheibe 3 aus dem Einflussbereich der Austrittsöffnung 5a heraus bewegt und gelangen in den Einflussbereich der Düsen 9.

FIG 5 zeigt einen Schnitt V - V durch die Siebeinrichtung 1 aus FIG 3. Gleiche Bezugszeichen wie in den Figuren 1 bis 4 kennzeichnen gleiche Elemente. Aufgrund der Rotationsbewegung der Siebscheibe 3 und der Beaufschlagung dieser mit Reinigungsmittel 10, 10' werden die Siebrückstände 40 von der Siebscheibe 3 entfernt und zusammen mit dem gebrauchten Reinigungsmittel 10'' über Ablaufflächen 102 in Richtung der Gehäuseablauföffnung 101 befördert. Nach Verlassen des Gehäuses 100 werden das gebrauchte Reinigungsmittel 10'' und die Siebrückstände 40 optional in Richtung eines Auffangbeckens 11 geführt. Ein am Auffangbecken 11 gegebenenfalls vorgesehenes Reinigungsaggregat 12 trennt das Reinigungsmittel von den enthaltenen Fest- und Fremdstoffen. Das wiederaufbereitete Reinigungsmittel 10' wird wieder zu den Düsen 9 geführt und wiederverwendet.

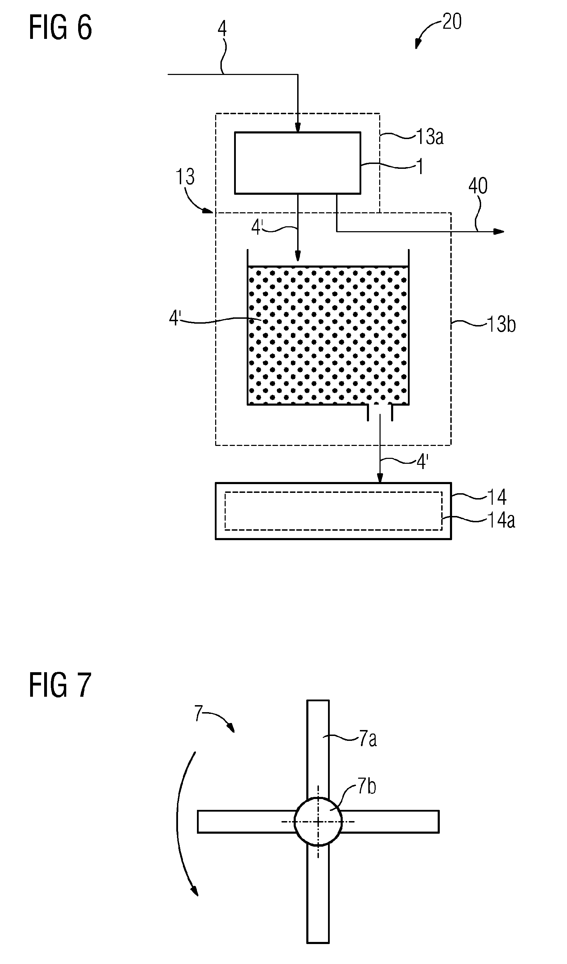

Das Flügelrad 7a und die Turbinenachse 7b sind in FIG 7 weiterhin im Schnitt VII - VII gezeigt.

Die Siebeinrichtung 1 wird insbesondere derart betrieben, dass eine Zuführung eines zu siebenden Mediums 4, insbesondere einer Suspension mit einem Volumenanteil an Feststoff im Bereich von 40 bis 60%, erfolgt. Die Suspension wird über das Zuführrohr 6 in den ersten Teilbereich 3' der Siebscheibe 3 geführt, wobei die Suspension die Turbineneinrichtung 7 antreibt, welche ihrerseits die Drehachse 2 und die Siebscheibe 3 rotierend antreibt. Es erfolgt eine Siebung der Suspension, wobei die durch die Siebscheibe 3 hindurchtretende Suspension ein gesiebtes Medium 4' ausbildet und das auf der Siebscheibe 3 verbleibenden Teile aus der Suspension einen Siebrückstand 40 bilden. Das gesiebte Medium 4' bzw. die gesiebte Suspension wird über die Aufnahmeöffnung 6a in das Abführrohr 6 abgeführt. Der Siebrückstand 40 wird von der Siebscheibe 3 abgeführt.

FIG 6 zeigt schematisch eine Flotationseinrichtung 20 umfassend eine Speiseeinrichtung 13 mit einem Fallrohr 13a, in welches eine Siebeinrichtung 1 eingebaut ist, sowie mit einem Vorratsbehälter 13b, von welchem aus die Flotationskammer 14a einer Flotationsmaschine 14 gespeist wird. Das zu siebende Medium 4 in Form einer Suspension wird in der Speiseeinrichtung 13 der Siebeinrichtung 1 zugeführt. Das gesiebte Medium 4' bzw. die gesiebte Suspension wird dem Vorratsbehälter 13b zugeführt und von dort in die Flotationskammer 14a eingespeist. Die abgetrennten Siebrückstände 40 werden abgeführt, so dass diese nicht zu einer Verstopfung oder Blockade im Bereich der Speiseeinrichtung 13 der Flotationsmaschine 14 führen können.

Die hier gezeigte Siebeinrichtung ist lediglich beispielhaft für eine Vielzahl weiterer möglicher Bauformen. So können beispielsweise die die Gehäuseform und -größe, die Form und Anzahl der Zuführ- und Abführrohre, die Anordnung der Turbineneinrichtung und deren Wirkverbindung mit der Siebscheibe, die Ausgestaltung des Flügelrades, die Anordnung und Anzahl von Gehäuseablauföffnungen, die Anordnung und Anzahl von Düsen usw. in weiten Grenzen variieren, ohne den Erfindungsgedanken zu verlassen. Auch können im Bereich der Oberseite der Siebscheibe mechanische Abstreifer vorgesehen sein, die die Entfernung und Reinigung der Siebscheibe von Siebrückständen unterstützen.

**Patentansprüche**

1. Siebeinrichtung (1), umfassend:

   - eine mittels einer senkrechten Drehachse (2) rotierbare Siebscheibe (3) zur Siebung eines zu siebenden Mediums (4),

- ein Zuführrohr (5) zur Zuführung des zu siebenden Mediums (4) zur Siebscheibe (3), wobei das Zuführrohr (5) eine oberhalb der Siebscheibe (3) mündende Austrittsöffnung (5a) für das zu siebende Medium (4) aufweist, wobei die Austrittsöffnung (5a) in Richtung der Drehachse (2) gesehen neben der Drehachse (2) angeordnet ist und eingerichtet ist, einen ersten Teilbereich der Siebscheibe (3) mit dem zu siebenden Medium (3) zu beaufschlagen,

- ein unterhalb des ersten Teilbereichs der Siebscheibe (3) angeordnetes Abführrohr (6) zur Abführung des durch die Siebscheibe (3) hindurchtretenden, gesiebten Mediums (4'), wobei das Abführrohr (6) eine Aufnahmeöffnung (6a) für das gesiebte Medium (4') aufweist, und

- eine im Zuführrohr (5) angeordnete, durch das zu siebende Medium (4) antreibbare Turbineneinrichtung (7), welche eingerichtet ist, die Drehachse (2) und die damit verbundene Siebscheibe (3) anzutreiben.

2. Siebeinrichtung nach Anspruch 1,
   wobei weiterhin mindestens eine Düse (9) zur Abgabe eines Reinigungsmittels (10) in Richtung der Siebscheibe (3) vorhanden ist.

3. Siebeinrichtung nach Anspruch 2,
   wobei die mindestens eine Düse (9) in Richtung der Drehachse (2) gesehen einem zweiten Teilbereich der Siebscheibe (3) zugeordnet und dazu eingerichtet ist, diesen mit dem Reinigungsmittel (10) zu beaufschlagen, wobei der zweite Teilbereich neben und/oder beabstandet von dem ersten Teilbereich angeordnet ist.

4. Siebeinrichtung nach einem der Ansprüche 1 bis 3,
   wobei weiterhin ein Gehäuse (100) vorhanden ist, in welchem zumindest die Siebscheibe (3) angeordnet ist, wobei das Gehäuse (100) weiterhin mit dem Zuführrohr (5) und dem Abführrohr (6) verbunden ist, wobei die Austrittsöffnung (5a) und die Aufnahmeöffnung (6a) im Gehäuse (100) angeordnet sind, und wobei das Gehäuse (100) an seiner Unterseite eine Gehäuseablauföffnung (101) zur Abführung von Siebrückständen (40) aufweist, welche von dem zu siebenden Medium (4) abgetrennt werden.

5. Siebeinrichtung nach Anspruch 4,
   wobei das Gehäuse (101) weiterhin die Drehachse (2), die Turbineneinrichtung (7) und die mindestens eine Düse (9) beherbergt.

6. Siebeinrichtung nach einem der Ansprüche 1 bis 5,
   wobei die Turbineneinrichtung (7) mit der Drehachse (2) über ein Getriebe (8) verbunden ist.

7. Siebeinrichtung nach einem der Ansprüche 1 bis 6,
   wobei die Turbineneinrichtung (7) eine horizontale Turbinenachse (7b) und ein an dieser angeordnetes Flügelrad (7a) umfasst.

8. Verfahren zum Betreiben einer Siebeinrichtung (1) nach einem der Ansprüche 1 bis 7, umfassend folgende Schritte:

   - Zuführen eines zu siebenden Mediums (4) über das Zuführrohr (6) in den ersten Teilbereich der Siebscheibe (3), wobei das zu siebende Medium (4) die Turbineneinrichtung (7) antreibt, welche ihrerseits die Drehachse (2) und die Siebscheibe (3) rotierend antreibt,
   - Siebung des zu siebenden Mediums (4), wobei das durch die Siebscheibe (3) hindurchtretende Medium (4) ein gesiebtes Medium (4') ausbildet und das auf der Siebscheibe (3) verbleibende Medium (4) einen Siebrückstand (40) bildet,
   - Abführen des gesiebten Mediums (4') über die Aufnahmeöffnung (6a) in das Abführrohr (6), und
   - Abführen des Siebrückstands (40) von der Siebscheibe (3).

9. Verfahren nach Anspruch 8,
   wobei das Abführen des Siebrückstands (40) von der Siebscheibe (3) mittels eines Reinigungsmittels (10, 10') erfolgt, das über die mindestens eine Düse (9) auf die Siebscheibe (3) aufgebracht wird.

10. Verfahren nach einem der Ansprüche 8 oder 9,
    wobei das zu siebende Medium (4) durch eine Suspension gebildet wird.

11. Flotationseinrichtung (20), umfassend eine Flotationsmaschine mit einer Flotationskammer zur Aufnahme von Suspension und eine Speiseeinrichtung zum Zuführen von Suspension in die Flotationskammer, wobei die Speiseeinrichtung zur Siebung der Suspension eine Siebeinrichtung (1) nach einem der Ansprüche 1 bis 7 umfasst.

12. Verwendung einer Siebeinrichtung (1) nach einem der Ansprüche 1 bis 7 zur Siebung eines Mediums (4) in Form einer Suspension mit einem Feststoffpartikel-Gehalt im Bereich von 40 bis 60 Vol.-%.

FIG 1

FIG 2

FIG 3

FIG 4

## FIG 5

FIG 6

FIG 7

Europäisches
Patentamt

European
Patent Office

Office européen
des brevets

**EUROPÄISCHER RECHERCHENBERICHT**

Nummer der Anmeldung

EP 14 17 9659

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | US 4 844 789 A (LUNDQVIST KJELL U W [SE]) 4. Juli 1989 (1989-07-04) * Zusammenfassung; Abbildungen 1-4 * ----- | 1-12 | INV. B01D33/15 B01D33/46 B01D33/76 B01D33/80 B07B1/08 D21D5/04 |
| A | DE 39 32 229 A1 (SIEMENS AG [DE]) 4. April 1991 (1991-04-04) * Zusammenfassung; Abbildungen 1-5 * ----- | 1-12 | |
| A | DE 11 66 738 B (BENTELER INTERTEX ORGANISATION) 2. April 1964 (1964-04-02) * Spalte 4, Zeilen 2-21; Abbildungen 3,4 * ----- | 1-12 | |
| A | US 4 303 522 A (DUCASSE JOSEPH C V) 1. Dezember 1981 (1981-12-01) * Zusammenfassung; Abbildung 1 * ----- | 1-12 | |
| A | US 5 975 311 A (JACKSON PHILIP [FR]) 2. November 1999 (1999-11-02) * Zusammenfassung; Abbildungen 1-5 * ----- | 1-12 | |
| | | | **RECHERCHIERTE SACHGEBIETE (IPC)** B01D B07B D21D |

Der vorliegende Recherchenbericht wurde für alle Patentansprüche erstellt

| Recherchenort | Abschlußdatum der Recherche | Prüfer |
|---|---|---|
| München | 21. Januar 2015 | Sembritzki, Thorsten |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 17 9659

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-01-2015

| Im Recherchenbericht angeführtes Patentdokument | | Datum der Veröffentlichung | Mitglied(er) der Patentfamilie | | Datum der Veröffentlichung |
|---|---|---|---|---|---|
| US 4844789 | A | 04-07-1989 | KEINE | | |
| DE 3932229 | A1 | 04-04-1991 | KEINE | | |
| DE 1166738 | B | 02-04-1964 | DE | 1166738 B | 02-04-1964 |
| | | | GB | 1002819 A | 02-09-1965 |
| | | | NL | 281849 A | 21-01-2015 |
| US 4303522 | A | 01-12-1981 | KEINE | | |
| US 5975311 | A | 02-11-1999 | DE | 69804728 D1 | 16-05-2002 |
| | | | DE | 69804728 T2 | 17-10-2002 |
| | | | EP | 0897096 A1 | 17-02-1999 |
| | | | FR | 2767381 A1 | 19-02-1999 |
| | | | JP | 3083506 B2 | 04-09-2000 |
| | | | JP | H11114341 A | 27-04-1999 |
| | | | US | 5975311 A | 02-11-1999 |

EPO FORM P0461

Für nähere Einzelheiten zu diesem Anhang : siehe Amtsblatt des Europäischen Patentamts, Nr.12/82